**Europäisches Patentamt**

**European Patent Office**

**Office européen des brevets**

(19)

(11) **EP 1 139 682 A2**

(12) **EUROPÄISCHE PATENTANMELDUNG**

(43) Veröffentlichungstag:
04.10.2001 Patentblatt 2001/40

(51) Int Cl.⁷: $H04Q\ 7/34$

(21) Anmeldenummer: 01105706.4

(22) Anmeldetag: 07.03.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **27.03.2000 DE 10015012**

(71) Anmelder: **SIEMENS AKTIENGESELLSCHAFT**
**80333 München (DE)**

(72) Erfinder: **Bauer, Claus, Dr.**
**81369 München (DE)**

(54) **Optimierung der Netzstruktur eines Funk-Kommunikationssystems**

(57) Geographische Einheiten (BTS211, BTS212, ...) einer gegebenen ersten Hierarchiestufe eines Funk-Kommunikationssystems werden geographischen Einheiten (MSCR1, MSCR2) wenigstens einer höheren zweiten Hierarchiestufe zugeordnet, indem

- Funktionen ($a_i$, $A_{i,j}$, $B_{i,j}$, $C_{i,j}$) aufgestellt werden, die den Umfang einer funk- und/oder vermittlungstechnischen Last, die eine geographische Einheit (BTS211, BTS212, ...) der ersten Hierarchiestufe an einem Knoten (MSC1, MSC2) des Funk-Kommunikaktionssystems hervorruft, als Funktion der Teilnehmerzahl des Funk-Kommunikationssystems angeben,

- eine Formel aufgestellt wird, die anhand der genannten Funktionen für eine gegebene Teilnehmerzahl den Umfang der Verarbeitungslast zu berechnen gestattet, die an jedem Knoten (MSC1, MSC2) bei einer gegebenen Zuordnung der Einheiten der ersten Hierarchiestufe zu den Einheiten der zweiten Hierarchiestufe anfällt,

- anhand der Formel, eine Zuordnung ausgewählt wird, die einen größtmöglichen Zuwachs (g) der Teilnehmerzahl des Funk-Kommunikationssystems erlaubt, ohne daß die Verarbeitungslast an einer geographischen Einheit (MSCR1, MSCR2) der zweiten Hierarchiestufe die Ressourcen dieser Einheit übersteigt.

**EP 1 139 682 A2**

**Beschreibung**

Die vorliegende Erfindung betrifft die Optimierung der Netzstruktur eines Funk-Kommunikationssystems. Genauer gesagt betrifft sie ein Verfahren zum Zuordnen geographischer Einheiten einer gegebenen ersten Hierarchiestufe eines Funk-Kommunikationssystems zu geographischen Einheiten wenigstens einer höheren zweiten Hierarchiestufe.

Funk-Kommunikationssysteme, wie das GSM-System weisen eine hierarchische Struktur auf. Die unterste Stufe dieser Struktur bilden Sender-Empfänger-Stationen, die mit Endgeräten per Funk kommunizieren, in der GSM-Terminologie als Basisstationen bezeichnet, bzw. die von ihnen bedienten Zellen. Mehrere Basisstationen bzw. ihre Zellen werden von einem Basisstationskontroller BSC versorgt. Die Gesamtheit der Zellen der von einem BSC versorgten Basisstationen wird daher auch als BSC-Region bezeichnet. Auf einer höheren Hierarchiestufe werden jeweils mehrere BSCs von einer Mobilfunk-Vermittlungszentrale (Mobile Switching Center MSC) versorgt. Die Gesamtheit der einem MSC zugeordneten Zellen wird dementsprechend auch als MSC-Region bezeichnet.

Um einen Teilnehmer, zu dem eine Verbindung aufgebaut werden soll, innerhalb einer MSC-Region zu finden, wird ein Suchsignal auf dem Broadcast-Kanal ausgestrahlt, das das Endgerät des Teilnehmers zu einer Antwort veranlaßt. Wenn die Zahl der Teilnehmer in einer MSC-Region gering ist, kann dieses Suchsignal in allen Zellen der MSC-Region ausgestrahlt werden. Wenn die Zahl der Teilnehmer groß ist, reicht die Kapazität des Broadcast-Kanals hierfür nicht aus, und kann es notwendig sein, diese MSC-Region in mehrere zusammenhängende sogenannte Location Areas zu unterteilen und das Suchsignal nur in derjenigen Location Area auszustrahlen, von der bekannt ist, daß der gesuchte Teilnehmer sich darin befindet. Andererseits macht die Unterteilung der MSC-Region in Location Areas bei der MSC eine Buchführung darüber erforderlich, in welcher der verschiedenen Location Areas einer MSC-Region sich ein Teilnehmer gerade befindet. Die Verarbeitungslast, die an einer MSC durch die Verwaltung der mobilen Teilnehmer anfällt, hängt folglich von der Art der Aufteilung der MSC-Region in Location Areas ab. Auch die Aufteilung der MSC-Region oder ihrer Location Areas in BSC-Regionen hat einen Einfluß auf die Verarbeitungslast. Es besteht daher Bedarf nach Verfahren, die es erlauben, ausgehend von einer gegebenen Verteilung von Basisstationen, MSCs und BSCs in einem geographischen Gebiet jeweils Zuordnungen der Basisstationen zu BSCs, zu Location Areas und/oder zu MSCs anzugeben, die die Verarbeitungslast minimieren, bzw. es ermöglichen, bei gegebener Verarbeitungsleistung des Mobilfunk-Kommunikationssystems die größtmögliche Teilnehmerzahl zu bedienen.

Diese Verarbeitungslast fällt zum überwiegenden Teil bei den MSCs an. Die MSC in einem Mobilfunk-Kommunikationssystem hat zwei Hauptfunktionen, die Rufverarbeitung (Call Processing) und die Mobilitätsverwaltung (Mobility Management).

Unter Rufverarbeitung wird hier die Verarbeitung jeglicher Art von Sprach- oder Datenkommunikation verstanden. Die durch die Rufverarbeitung an der MSC verursachte Last hängt von der Art der Kommunikation (Daten, Telefax, Short Message Service, etc.) und der Position der zwei kommunizierenden Teilnehmer relativ zur Netztopologie ab. Sie ist z. B. unterschiedlich für Rufe innerhalb des Mobilfunk-Kommunikationssystems und für Rufe aus einem externen Netz in das Mobilfunk-Kommunikationssystem bzw. aus dem Mobilfunk-Kommunikationssystem in ein externes Netz. Auch bei Rufen innerhalb eines Netzes ist die Last an der MSC unterschiedlich, je nachdem, ob die zwei Teilnehmer eines Gesprächs zur gleichen BSC- und/oder MSC-Region gehören oder nicht.

Unter Mobilitätsverwaltung werden alle Transaktionen in dem System verstanden, die durch die Verfolgung und Registrierung in der Zelle des Netz verursacht werden, in der sich ein einzelner Teilnehmer aufhält. Hier ist zwischen Handover und Aktualisierung des Aufenthaltsort eines Teilnehmers(Location Update) zu unterscheiden.

Unter Handover wird der Wechsel eines Teilnehmers von einer Zelle in eine andere Zelle bei gleichzeitiger Aufrechterhaltung einer laufenden Verbindung durch Zuweisung von Ressourcen zu der anderen Zelle verstanden. Die Last, die ein Handover an der MSC verursacht, hängt wesentlich von der Position der zwei an dem Handover beteiligten Zellen relativ zur Netzwerktopologie ab. Drei Fälle sind hier zu unterscheiden, die die MSC jeweils in unterschiedlichem Umfang belasten:

a. beide Zellen gehören zur gleichen BSC-Region, aber nicht zur gleichen Basisstation;

b. sie gehören zur gleichen MSC-Region, aber nicht zur gleichen BSC-Region, oder

c. sie gehören nicht zur gleichen MSC-Region.

Beim GSM-Netz braucht ein Handover zwischen Zellen, die zur gleichen Basisstation gehören, nicht betrachtet zu werden, da die MSC an der Verwaltung eines solchen Handovers nicht beteiligt ist.

Ein Location Update findet statt, wenn ein Teilnehmer im Bereitschaftsmodus seine Zelle wechselt. Hier sind zwei Fälle zu unterscheiden:

wenn die zwei Zellen zur gleichen Location Area gehören, braucht er von der MSC nicht zur Kenntnis genommen zu werden und verursacht dort keine Last,

wenn er die Location Area (oder die MSC-Region) wechselt, so muß dieser Teilnehmer aus einem Verzeichnis in der MSC ausgetragen und in ein anderes (bei der gleichen oder einer anderen MSC, je nachdem, ob die zwei Zellen zu zwei verschiedenen Location Areas innerhalb einer MSC-Region oder zu zwei verschiedenen MSC-Regionen gehören, eingetragen werden.

Die tatsächliche Last, die an der MSC durch diese diversen Verwaltungsvorgänge verursacht wird, und die z. B. in Form von benötigter Rechenzeit oder der Zahl ausgeführter Prozessorbefehle gemessen werden kann, kann für verschiedene Modelle von MSCs variieren.

Die Optimierung von Netzwerktopologien wird aber nicht nur durch die unterschiedlichen Arten zu berücksichtigender Lasten verkompliziert, sondern auch dadurch, daß die einzelnen Zellen, BSC-Regionen, MSC-Regionen etc., allgemein gesagt die verschiedenen geographischen Einheiten unterschiedlicher Hierarchiestufe, sich in ihren Eigenschaften wie etwa Teilnehmerzahl, Teilnehmerverhalten etc. unterscheiden.

All dies macht die Optimierung einer Netzwerkstruktur zu einem höchst komplexen Problem, zu dessen Lösung bislang im wesentlichen Erfahrungsregeln oder heuristische Ansätze herangezogen wurden.

Der Erfindung liegt die Aufgabe zugrunde, ein Verfahren zum Zuordnen geographischer Einheiten einer gegebenen ersten Hierarchiestufe eines Funk-Kommunikationssystems zu geographischen Einheiten wenigstens einer zweiten, höheren Hierarchiestufe bereitzustellen, das eine effektive Minimierung des mit der Verwaltung von Verbindungen und Teilnehmermobilität verbundenen Verarbeitungsaufwands auf mathematischer Grundlage mit geringem Rechenaufwand ermöglicht.

Diese Aufgabe wird durch das Verfahren mit den Merkmalen des Anspruchs 1 gelöst.

Ein erster Schritt des Verfahrens ist das Aufstellen von Funktionen, die den Umfang einer Verarbeitungslast, die eine geographische Einheit der ersten Hierarchiestufe an einem Knoten des Funk-Kommunikationssystems wie etwa einer MSC hervorruft, als Funktion der Teilnehmerzahl des Funk-Kommunikationssystems angeben. Bei der Aufstellung dieser Funktionen kann man sich auf empirische Messungen des Verkehrsaufkommens und des Teilnehmerverhaltens in den einzelnen Zellen des Funk-Kommunikationssystems stützen.

Ausgehend von diesen Funktionen wird dann eine Formel aufgestellt, die anhand der genannten Funktionen für eine gegebene Zuordnung der Einheiten der ersten Hierarchiestufe zu den Einheiten der zweiten Hierarchiestufe die an den betreffenden Knoten anfallende Verarbeitungslast zu berechnen gestattet.

Anhand dieser Formel, die die Last als Funktion der Netzteilnehmerzahl liefert, ist es möglich, eine Zuordnung auszuwählen, die einen größtmöglichen Zuwachs der Teilnehmerzahl über die aktuelle Teilnehmerzahl des Netzes hinaus erlaubt, ohne daß die von einem Knoten des Fuunk-Kommunikationssssytems zu verarbeitende Last die Ressourcen dieses Knotens übersteigt.

Für die Auswahl dieser Zuordnung können unterschiedliche Verfahren eingesetzt werden. Bevorzugt sind Verfahren der linearen Optimierung. Derartige Verfahren sind in diversen Lehrbüchern beschrieben und in einer Mehrzahl von kommerziell verfügbaren Computerprogrammen implementiert.

Das Verfahren kann auf unterschiedlichen hierarchischen Stufen des Funk-Kommunikationssystems eingesetzt werden. So kann man z. B. als Einheiten der ersten Hierarchiestufe Zellen und als Einheiten der zweiten Hierarchiestufe BSC-Regionen des Funk-Kommunikationssystem wählen, um dessen Struktur jeweils innerhalb einer Location Area oder MSC-Region zu optimieren, es können aber auch als Einheiten der zweiten Hierarchiestufe Location Areas und/oder BSC-Regionen genommen werden, um die Struktur des gesamten Netzes zu optimieren.

Um die Verarbeitung einfach zu halten, kann man die Funktionen, die den Umfang der Last angeben, als lineare Funktionen der Teilnehmerzahl approximieren.

Eine erhebliche Vereinfachung des Verfahrens läßt sich ferner dadurch erzielen, daß man von einer gegebenen, typischerweise einer real existierenden Zuordnung der Einheiten der ersten Hierarchiestufe des Funk-Kommunikationssystems zu den Einheiten der zweiten Hierarchiestufe ausgeht, und beim Auswählen der Zuordnung, die den größtmöglichen Zuwachs der Teilnehmerzahl erlaubt, nur solche Zuordnungen in Betracht zieht, die sich von der gegebenen Zuordnung nur durch bei solchen Einheiten der ersten Hierarchiestufe unterscheidet, die bei der gegebenen Zuordnung jeweils an den Grenzen zweier Einheiten der zweiten Hierarchiestufe liegen. Diese Vorgehensweise ist besonders bei Funk-Kommunikationssystemen mit einer großen Zahl von Einheiten der ersten Hierarchiestufe zweckmäßig, da die Zahl der theoretisch möglichen Zuordnungen von Einheiten der ersten Hierarchiestufe auf die Einheiten der zweiten überexponentiell mit der Zahl dieser Einheiten zunimmt, und die Zahl möglicherweise zu betrachtender Zuordnungen auf diese Weise radikal reduziert wird.

Die Folge einer solchen Einschränkung kann natürlich sein, daß eine noch bessere Verteilung, die die Umverteilung nicht nur von an einer Grenze liegenden geographischen Einheiten der ersten Hierarchiestufe erfordert hätte, sondern die auch einer daran angrenzenden, im Innern einer Einheit der zweiten Hierarchiestufe liegenden Einheit, nicht gefunden wird. Dies ist allerdings kein schwerwiegender Nachteil, da eine solche Einheit der ersten Hierarchiestufe nach einmaligem Durchführen des Verfahrens an der Grenze der neugebildeten Einheiten der zweiten Hierarchiestufe zu liegen kommt und somit durch iterative Anwendung des Verfahrens ebenfalls umgeordnet werden kann.

Nachfolgend wird ein Ausführungsbeispiel anhand der Zeichnung näher erläutert. Es zeigen:

Figur 1 eine beispielhafte Topologie eines Funk-Kommunikationssystems, auf das das erfindungsgemäße Verfahren anwendbar ist;

Figur 2 einen nichtoptimierten Grenzverlauf zwischen geographischen Einheiten des Funk-Kommunikationssystems,

Figur 3 einen optimierten Grenzverlauf zwischen den Einheiten;

Figur 4 und 5 veranschaulichen die iterative Ausführung des Verfahrens.

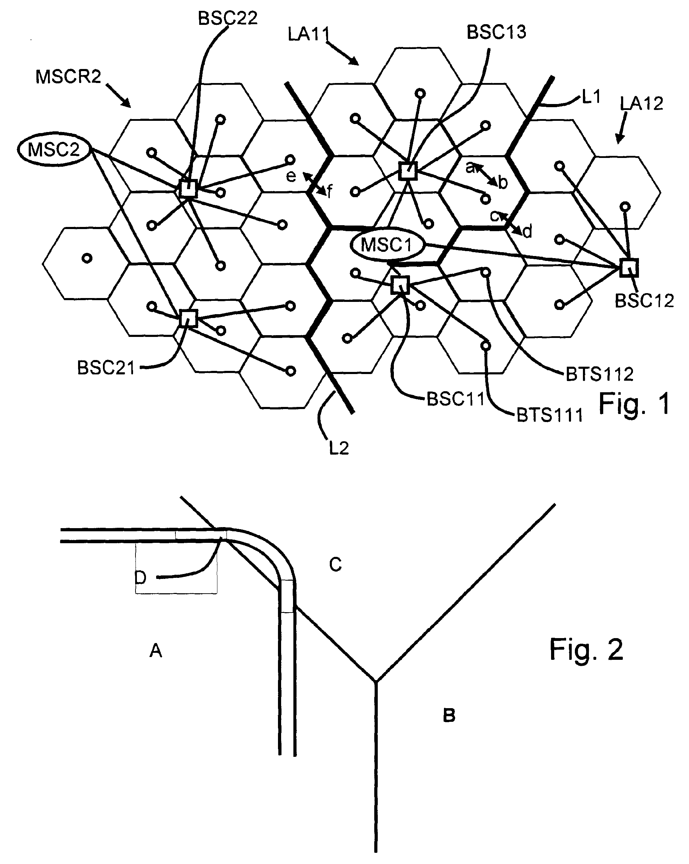

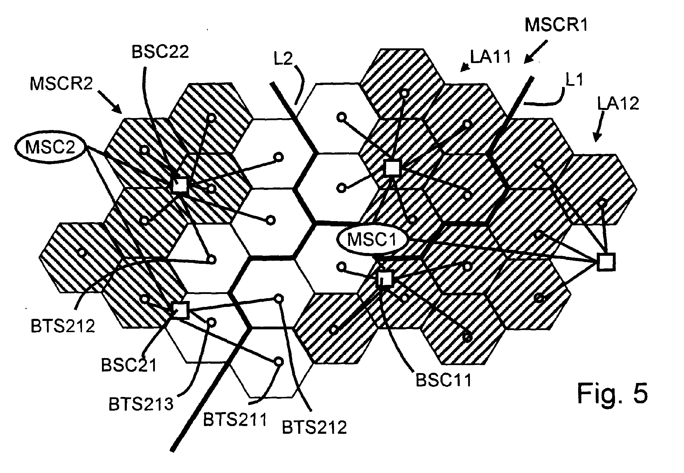

Figur 1 zeigt in einer idealisierten Darstellung die Topologie eines Ausschnitts aus einem Funk-Kommunikationssystem, hier einem GSM-System. Im betrachteten Ausschnitt befinden sich zwei Mobilfunk-Vermittlungszentralen MSCk, k=1,2, die jeweils mit mehreren Basisstationskontrollern BSCk1, l=1,2,..., als Quadrate dargestellt, verbunden sind. An jeden BSC sind mehrere Basisstationen BTSkli, i=1,2,..., dargestellt als Kreise, angeschlossen, die jeweils eine Zelle des Netzes versorgen. Die Zellen, hier idealisiert als Sechsecke dargestellt, bilden eine vollständige Überdeckung des betrachteten geographischen Gebiets.

Die Zellen stellen die geographische Einheit mit der niedrigsten hierarchischen Stufe in dem Funk-Kommunikationssystem dar. Alle mit einer BSC, etwa der BSC11, verbundenen Zellen bilden eine BSC-Region, die die geographische Einheit der nächsthöheren hierarchischen Stufe darstellt. Die BSC-Regionen von BSC11 und BSC12 sind zu einer gemeinsamen Location Area LA12 zusammengefaßt, die wiederum eine geographische Einheit höherer hierarchischer Stufe bildet. Die ebenfalls mit der MSC1 verbundene BSC13 gehört einer anderen Location Area LA11 an, was in der Figur durch die fette Grenzlinie L1 veranschaulicht ist.

Beide Location Areas LA11, LA12 bilden gemeinsam die MSC-Region MSCR1 der MSC1, die von der MSC-Region der MSC2 durch eine Grenzlinie L2 abgesetzt ist.

Die MSCR2 ist nicht in Location Areas unterteilt.

Wie man leicht sieht, verursacht ein Teilnehmer, der sich innerhalb einer Zelle von einem Punkt a nach b und zurück bewegt, keine Verarbeitungslast bei der Mobilitätsverwaltung der ihm zugeordneten MSC1. Ein anderer Teilnehmer, der sich vom Punkt c nach d und zurück über die Grenze L1 bewegt, verursacht jedoch eine solche Last, weil er beim Verlassen einer Location Area aus der Liste der darin suchbaren Teilnehmer ausgetragen und in eine entsprechende Liste der anderen Location Area eingetragen werden muß. Da beide Location Areas zur MSC1 gehören, fällt die Last vollständig in dieser an. Im Fall einer Teilnehmerbewegung zwischen den Punkten e und f beiderseits der Grenze L2 erhöht sich die Last dadurch, daß die zwei MSCs, zwischen deren Regionen sich die Teilnehmerbewegung abspielt, sich über das Ein- und Austragen des Teilnehmers aus den jeweiligen Listen verständigen müssen, um zu gewährleisten, daß dieser immer erreichbar bleibt.

Das Ausmaß der Verarbeitungslast hängt von einer Vielzahl von Faktoren ab, natürlich zum einen von der Zahl der Teilnehmer in einer Zelle, aber auch von deren Mobilitäts- und/oder Kommunikationsverhalten. Auch der Zuschnitt und die geographische Lage einer Zelle spielen eine Rolle. So sind z. B. in Innenstadtbereichen gelegene Zellen im allgemeinen wesentlich kleiner als solche in dünner besiedelten Gegenden, und aufgrund der durch die Bebauung stark variierenden Empfangsbedingungen weicht ihre Gestalt häufig stark von der idealisierten Sechseckform ab. Infolgedessen kommt es bei einer Bewegung eines Teilnehmers in einem städtischen Bereich bereits auf kurzen Entfernungen zu einer Vielzahl von Zellenwechseln; die verwaltet werden müssen, wohingegen eine gleich lange Bewegung außerhalb einer Stadt möglicherweise vollständig innerhalb einer Zelle stattfinden kann. Es ist daher wichtig, daß der Zuschnitt der Zellen bzw. auch der anderen geographischen Einheiten an das Bewegungsverhalten der Teilnehmer angepaßt ist.

Figur 2 zeigt ein Beispiel einer nicht optimal angepaßten Netz-Topologie. Die Figur zeigt einen Ausschnitt aus einem Funk-Kommunikationsnetz, in dem drei geographische Einheiten gleicher Hierarchiestufe A, C, B aneinandergrenzen. Ein Verkehrsweg D, z. B. eine Autobahn, verläuft von der geographischen Einheit A kommend über ein kurzes Stück innerhalb der Einheit C und kehrt dann in die Einheit A zurück. Zur Vereinfachung der Beschreibung kann angenommen werden, daß es sich bei den geographischen Einheiten A, C, B um MSC-Regionen handelt, die Problematik ist aber bei Location Areas oder BSC-Regionen die gleiche. Es wird angenommen, daß die Teilnehmer in jeder der drei Regionen A, B, C durch das gleiche Mobilitätsverhalten gekennzeichnet sind. Außerdem kann der Einfachheit halber angenommen werden, daß die Zahl der Teilnehmer in jeder der drei Regionen in etwa gleich ist. Eine Analyse des Auslastungsgrades der MSCs der Region A, B, C mag ergeben, daß die Ressourcen der MSC B zu 60% ausgelastet sind, die der MSCs A und C aber bis zu 80%. Gegenwärtig können alle MSCs den Kommunikationsverkehr noch ohne Schwierigkeiten handhaben. Es muß jedoch angenommen werden, daß die Zahl der Teilnehmer in Zukunft wachsen wird, und zwar aller Wahrscheinlichkeit nach für alle drei betrachteten Regionen mit in etwa gleicher Geschwindigkeit. Bei dem derzeitigen Zuschnitt der Regionen A, B, C werden daher die MSCs A, B ihre Kapazitätsgrenze schneller erreichen als die MSC B, so daß alsbald Investitionen zur Ausweitung der Kapazität in den Regionen A, C erforderlich sein werden, während in der Region B weiterhin Ressourcen brachliegen. Es ist daher wünschenswert, die Verarbeitungslast möglichst gleichmäßig auf alle drei Regionen zu verteilen.

Da angenommen wurde, daß die Teilnehmerzahl und das Verkehrsmodell in den verschiedenen MSC-Regionen gleich ist, kann die unterschiedliche Ressourcen-Auslastung nur durch eine unterschiedliche Verarbeitungslast durch die Mobilitätsverwaltung in den verschiedenen MSC-Regionen begründet sein. Bei dem hier betrachteten Beispiel könnten diese Unterschiede zurückzuführen sein auf Benutzer, die bei der Fahrt auf der Autobahn D ihr Mobiltelefon benutzen oder in Bereitschaft halten und die so zu einer bezogen auf die Teilnehmerzahl in den Regionen A, C relativ hohen Zahl von zu verwaltenden Zellenwewechseln führen.

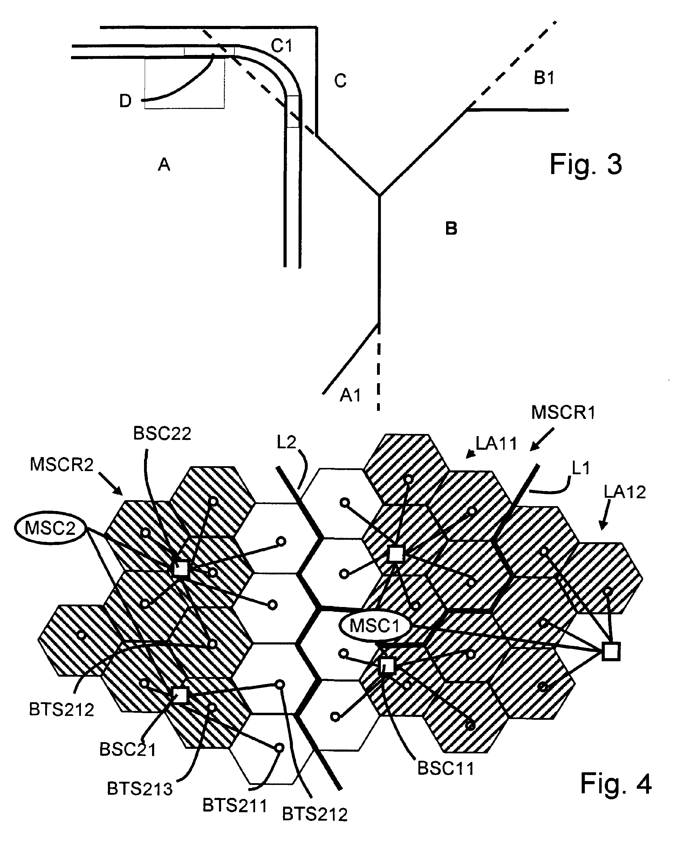

Um diese Verarbeitungslast zu verringern, könnte man z. B. den Teil C1 von der Region C abtrennen und der Region A zuschlagen, wie in Figur 3 gezeigt, so daß die Autobahn vollständig innerhalb der Region A liegt. Dies würde jedoch dazu führen, daß die Teilnehmerzahl in der Region A auf Kosten der Region C zunimmt, und würde auf diese Weise wiederum zu einer Ungleichverteilung der Last führen. Bei dem hier betrachteten einfachen Beispiel von nur drei Regionen läßt sich das Problem anschaulich durch einen Ringtausch lösen, bei dem ein Teilbereich B1 von der Region B abgetrennt und der Region C zugeschlagen wird und ein Teilbereich A1 von der Region A abgetrennt und der Region B zugeschlagen wird, so daß die Teilnehmerzahl in allen Regionen wiederum in etwa gleich bleiben. Je größer die Zahl der zu betrachtenden Regionen in einem Netz ist, um so schwieriger sind jedoch solche Lösungen zu finden. Außerdem setzt das intuitive Finden einer Lösung meist Kenntnis der Gründe für eine Ungleichverteilung der Last voraus.

Erfindungsgemäß wird deshalb folgender Verfahrensansatz vorgeschlagen:

Zunächst werden für jede Basisstation des vom Funk-Kommunikationssystems oder eines zu optimierenden Teilbereichs des Funk-Kommunikationssystems eine Mehrzahl von Funktionen ermittelt, die die Verarbeitungslast angeben, die die betreffende Basisstation an der zugeordneten MSC hervorruft.

Ein erster Beitrag zur Verarbeitungslast einer MSC k kommt von der Rufverarbeitung der von der Basisstation kommenden Rufe. Diese Last kann für jede Basisstation unterschiedlich sein und sei gegeben durch eine Funktion $a_{k,i}(x)$, wobei i die Basisstation und k die MSC identifiziert und x die Zahl der Teilnehmer angibt. Die Funktion a kann als Funktion der Teilnehmerzahl der betrachteten Zelle aufgestellt werden, für die nachfolgende Betrachtung ist es allerdings einfacher, wenn sie als Funktion der Gesamtzahl der Teilnehmer des Funk-Kommunikationssystem formuliert wird, wobei davon ausgegangen wird, daß die Zahl der Teilnehmer in einer Zelle durch Multiplizieren der Gesamt-Teilnehmerzahl mit einem Anteilsfaktor erhalten werden kann, wobei der Anteilsfaktor im wesentlichen unverändert bleibt, auch wenn im Laufe der Zeit die Zahl der Teilnehmer des Funk-Kommunikationssystems wächst.

Wenn man annimmt, daß S die Gesamt-Teilnehmerzahl des Funk-Kommunikationssystems zum gegenwärtigen Zeitpunkt ist, und g eine Zuwachsrate der Teilnehmerzahl im Laufe der Zeit angibt, so kann die Gesamtlast, die zu einem zukünftigen Zeitpunkt an einer beliebigen Mobilfunk-Vermittlungszentrale MSC k anfällt, durch den Ausdruck

$$\sum_{i=1}^{N} a_{k,i}\left(S(1+g)\right) x_{k,i}$$

abgeschätzt werden, wobei der Summationsindex i über alle Basisstationen des Funk-Kommunikationssystems läuft und der Faktor $x_{k,i} = 1$ ist, wenn die betrachtete Basisstation i zur MSC-Region k gehört und andernfalls 0 ist.

In analoger Weise können Funktionen $A_{k,l,i,j}$ aufgestellt werden, die jeweils die Last angeben, die an der MSC der Basisstation i durch Handover und Location Updates beim Wechsel eines Teilnehmers aus der Zelle der Basisstation i in die Zelle einer einer Basisstation j anfällt, wenn diese Basisstationen unterschiedlichen MSC-Regionen k, l angehören. Die gesamte innerhalb der MSC-Region k durch Teilnehmerwechsel in andere MSC-Regionen 1 verursachte Last kann dann geschrieben werden als

$$\sum_{\substack{l=1 \\ l \neq k}}^{M} \sum_{i=1}^{N} \sum_{j \in N(i)} A_{k,l,i,j}\left(S(1+g)\right) X_{k,l,i,j}$$

wobei $X_{k,l,i,j}$ = 1 ist, wenn die Basisstation i sich in der MSC-Region k und die Basisstation j der MSC-Region 1 befindet, und sonst 0 ist. Da ein Handover bzw. Location Update nur zwischen solchen Basisstationen möglich ist, die geographisch benachbarte Zellen bedienen, kann die Summation über die Basisstationen j sich auf diejenigen Basisstationen beschränken, die der Menge N(i) der an die Basisstation i angrenzenden Basisstationen angehören. M bezeichnet die Zahl der MSC-Regionen.

Weitere Funktionen $B_{m,n,i,j}$ werden für die Last aufgestellt, die an der MSC k durch Location Updates und Handover zwischen Location Areas innerhalb der MSC-Region k verursacht wird. Die Gesamtlast durch Vorgänge dieser Art an der MSC k läßt sich schreiben als

$$\sum_{\substack{m \in M(k)}} \sum_{\substack{n \in M(k) \\ m < n}} \sum_{i=1}^{N} \sum_{j \in N(i)} B_{m,n,i,j}(pg)\, Y_{m,n,i,j}$$

wobei $Y_{m,n,i,j}$ = 1 ist, wenn die Basisstation i sich in der Location Area m und die Basisstation j in der Location Area n befindet, und sonst 0 ist. Auch hier kann sich die Summation auf diejenigen Basisstationen j $\in$ N(i) beschränken, die an die Basisstation i angrenzen, und es wird nur über diejenigen Location Areas m, n summiert, die zur Menge M(k) der Location Areas der MSC k gehören, wobei die Location Areas m, n nicht gleich sein dürfen.

Einen vierten Beitrag zu der Verarbeitungslast leisten Handover und Location Updates, die zwischen BSC-Regionen innerhalb einzelner Location Areas stattfinden. Deren Beitrag läßt sich schreiben als

$$\sum_{\substack{m \in M(k)}} \sum_{\substack{o \in L(m)}} \sum_{\substack{p \in L(m) \\ o < p}} \sum_{i=1}^{N} \sum_{j \in N(i)} C_{o,p,i,j}(S(1+g))\, Z_{o,p,i,j}$$

wobei $C_{o,p,i,j}$ eine Funktion ist, die den Beitrag der Handover von der Basisstation i zur Basisstation j unter der Annahme angibt, daß i und j unterschiedlichen BSC-Regionen o, p der gleichen Location Area angehören, und $Z_{o,p,i,j}$ = 1 ist, wenn die Basisstation i in der BSC-Region o und die Basisstation j in der BSC-Region p liegt, und sonst 0 ist. Wiederum erstreckt sich die Summation über alle Basisstationen i = ..., N, über die Basisstationen j $\in$ N(i), die der Basisstation i benachbart sind, über alle Location Areas m $\in$ M(k), die in der MSC-Region k liegen, sowie alle Kombinationen von verschiedenen BSC-Regionen o, p aus der Location Area m.

Damit das Funk-Kommunikationssystem arbeitsfähig ist, muß für alle MSCs die Summe der vier Lastentypen kleiner sein als die Gesamtverarbeitungskapazität $L_k$ der MSCk:

$$\sum_{i=1}^{N} a_{k,i}(S(1+g))\, x_{k,i} + \sum_{\substack{l=1 \\ l \neq k}}^{M} \sum_{i=1}^{N} \sum_{j \in N(i)} A_{k,l,i,j}(S(1+g))\, X_{k,l,i,j}\; +$$

$$\sum_{\substack{m \in M(k)}} \sum_{\substack{n \in M(k) \\ m < n}} \sum_{i=1}^{N} \sum_{j \in N(i)} B_{m,n,i,j}(S(1+g))\, Y_{m,n,i,j} + \sum_{\substack{m \in M(k)}} \sum_{\substack{o \in L(m)}} \sum_{\substack{p \in L(m) \\ o < p}} \sum_{i=1}^{N} \sum_{j \in N(i)} C_{o,p,i,j}(S(1+g))\, Z_{o,p,i,j} \leq L_k$$

$$(1)$$

$$\forall k \in \{1,...,M\}$$

Die Netz-Topologie bzw. genauer gesagt die Zuordnung der verschiedenen geographischen Einheiten des Funk-Kommunikationssystem zu den geographischen Einheiten der nächsthöheren hierarchischen Stufe läßt sich beschreiben mit Hilfe der Symbole

$$x_{k,i} = \begin{cases} 1, & \text{wenn BTS i in MSC - Region k liegt} \\ 0 & \text{sonst} \end{cases}$$

$$y_{m,i} = \begin{cases} 1, & \text{wenn BTS } i \text{ in location area } m \text{ liegt} \\ 0 & \text{sonst} \end{cases}$$

$$z_{o,i} = \begin{cases} 1, & \text{wenn BTS } i \text{ in BSC - Region } o \text{ liegt} \\ 0 & \text{sonst} \end{cases}$$

Für diese Symbole gelten die Randbedingungen

$$\sum_{k=1}^{M} x_{k,i} = 1 \qquad (2)$$

$$\sum_{m=1} y_{m,i} = x_{k,i} \qquad (3)$$

$$\sum_{o \in L(m)} z_{o,i} = y_{m,i} \qquad (4)$$

$\forall\, i \in \{1,...,N\}, \, \forall\, k \in \{1,...,M\}, \, \forall\, l \in \{1,...,L\}$

Diese Formeln entsprechen der Aussage, daß jede Basisstation BTS i genauer einer MSC-Region angehört, daß sie in einer Location Area liegt, die zur gleichen MSC-Region wie die Basis-station selbst gehört bzw. daß sie in einer BSC-Region liegt, die zur gleichen Location Area wie die Basisstation selbst gehört.

Die Symbole X, Y, Z können von den Symbolen x, y, z jeweils durch ein paar von Ungleichungen abgeleitet werden:

$$X_{k,l,i,j} \leq \min(x_{k,i}, x_{l,j}) \qquad (5)$$

$$X_{k,l,i,j} \geq x_{k,i} + x_{l,j} - 1 \qquad (6)$$

$$Y_{m,n,i,j} \leq \min(y_{m,i}, y_{n,j}) \qquad (7)$$

$$Y_{m,n,i,j} \geq y_{m,i} + y_{n,j} - 1 \qquad (8)$$

$$Z_{o,p,i,j} \leq \min(z_{o,i}, z_{p,j}) \qquad (9)$$

$$Z_{o,p,i,j} \geq z_{o,i} + z_{p,j} - 1 \qquad (10)$$

$$g \leq 0 \qquad (11)$$

$\forall\, k,\, l \in \{1,...,M\}, k \neq l, \, \forall\, m,\, n \in \{1,...,L\}, m \neq n,$
$\forall\, o,\, p \in \{1,...,B\}, o \neq p, \, \forall\, i \in \{1,...,N\}, \, \forall\, j \in N(i)$

Eine optimierte Verteilung der Basisstationen auf die BSC-Regionen, Location Areas und MSC-Regionen des Funk-Kommunikationssystems kann nun durch Anwendung eines linearen Optimierungsverfahrens auf das Gleichungs- und Ungleichungssystem, bestehend aus den Formeln 1 - 11 ermittelt werden. Programmsysteme für diesen Zweck sind kommerziell verfügbar und brauchen deshalb hier nicht genauer erläutert zu werden. Lediglich als Beispiele seien hier die Programme lp_solve oder Siplex genannt.

Bei diesem Modell ist jede Basisstation einer BSC-Region, einer Location Area und einer MSC-Region zugeordnet, es ist jedoch nicht vorgegeben, mit welchen BSCs die Basisstationen verbunden sind. Die linke Seite der Gleichung 1 gibt die benötigten Ressourcen an der MSC k zum Zeitpunkt t1 an, wenn die Gesamtzahl von Teilnehmern von p auf pg angewachsen ist. Die Randbedingung (11) gewährleistet, daß bei der Optimierung entweder eine Lösung, die einen positiven Zuwachs der Teilnehmerzahl zuläßt, oder keine Lösung gefunden wird.

Bei dem obigen Ansatz wurde vorausgesetzt, daß eine feste Zuordnung der Location Areas zu den MSC-Regionen und der BSC-Regionen zu den Location Areas gegeben ist. Diese Annahme kann in folgender Weise abgeschwächt werden:

Wiederum wird eine Zuordnung der Location Areas zu den MSC-Regionen vorgegeben, anstatt aber jeder Location Area die darin enthaltenen BSC-Regionen fest vorzugeben, werden folgende zwei Mengen definiert:

$H(m)$ = Menge aller BSC-Regionen, die in der Location Area m liegen können,

$G(o)$ = Menge aller Location Areas, die die BSC-Region o enthalten können,

und es wird verlangt, daß beide Mengen nicht leer sind. Die Zahl von Location Areas und BSC-Regionen ist wie beim zuvor beschriebenen Modell fest vorgegeben. Anstelle der Symbole $Z_{o,p,i,j}$ aus Gleichung 1 wird ein neues Symbol $W_{m,o,p,i,j}$ eingeführt, das gleich 1 ist, wenn die Basisstation i zur BSC-Region o, die Basisstation j zur BSC-Region p und die BSC-Regionen k und 1 zur Location Area m gehören, und sonst 0 ist. Unter Verwendung dieser Symbole werden die folgenden Beziehungen aufgestellt.

$$10000(2 - z_{o,i} - z_{o,j}) \geq \left| \sum_{m \in G(o)} l\left(y_{m,i} - y_{m,j}\right) \right| \qquad (12)$$

$$\sum_{o=1}^{B} z_{o,i} = 1 \qquad (13)$$

$$\sum_{o \in H(m)} z_{o,i} \geq y_{m,i} \qquad (14)$$

$$W_{m,o,p,i,j} \leq \min(z_{o,i},\ z_{p,j},\ y_{m,j}, y_{m,i}) \qquad (15)$$

$$W_{m,o,p,i,j} \geq z_{o,i} + z_{p,j} + y_{m,j} + y_{m,i} - 3 \qquad (16)$$

$\forall\, m \in \{1,...,L\},\ \forall\, o,\, p \in \{1,...,B\},\ o \neq p,\ \forall\, i \in \{1,...,N\},\ \forall j \in N(i).$

Die Formeln 12 bis 14 treten an die Stelle der Formel (4), und die Formeln (15) und (16) an die Stelle von (9) bzw. (10). Die Formel (1) wird ersetzt durch

$$\sum_{i=1}^{N} a_{k,i}\left(S(1+g)\right) x_{k,i} + \sum_{\substack{l=1 \\ l \neq k}}^{M} \sum_{i=1}^{N} \sum_{j \in N(i)} A_{k,l,i,j}\left(S(1+g)\right) X_{k,l,i,j} +$$

$$\sum_{m \in M(k)} \sum_{\substack{n \in M(k) \\ n < m}} \sum_{i=1}^{N} \sum_{j \in N(i)} B_{m,n,i,j}\left(S(1+g)\right) Y_{m,n,i,j} + \qquad (17)$$

$$\sum_{m \in M(k)} \sum_{o \in H(m)} \sum_{\substack{p \in H(m) \\ o < p}} \sum_{i=1}^{N} \sum_{j \in N(i)} C_{o,p,i,j}\left(S(1+g)\right) W_{m,o,p,i,j} \leq L_k$$

$$\forall k \in \{1,...,M\}$$

Die Gleichungen (13), (14) gewährleisten, daß wenn die Basisstation i zur Location Area m gehört, sie zu genau einer BSC-Region o aus der Menge H(m) gehört. Für diese Location Area m gilt

$$m \in G(o) \text{ und } y_{m,i} = 1. \qquad (18)$$

Wegen des großen Faktors 10000 stellt die Formel (12) keine Einschränkung dar, wenn $z_{o,i}$ und $z_{o,j}$ nicht beide gleich 1 sind, das heißt wenn die Basisstationen i, j nicht beide der BSC-Region o angehören. Andernfalls ist durch Formeln 12 und 18 gesichert, daß die Basisstationen i, j der gleichen Location Area angehören. In Gleichung (17) wird über o,p ∈ H(m) anstatt über o,p ∈ L(m) summiert, weil $W_{m,o,p,i,j}$ gleich 0 ist, wenn o und p nicht beide zu m gehören.

Wie weiter vorne erwähnt, führt die Festlegung von Location Areas zu einer Vergrößerung der Last an der MSC. Deshalb würde bei einer Optimierung, wenn man eine vollständige Neuzuordnung aller BSC-Regionen zu Location Areas zuließe, das heißt, wenn die Menge H(m) alle BSC-Regionen des Funk-Kommunikationssystems enthielte und die Menge G(o) alle Location Areas enthielte, die Optimierung dazu führen, daß alle Basisstationen einer MSC-Region einer einzigen Location Area zugewiesen würden, um so die Last zu minimieren, die durch den Wechsel von Teilnehmern zwischen Location Areas innerhalb einer MSC-Region entsteht. Ein solches Ergebnis ist jedoch unerwünscht, da es wie bereits erläutert, zu einer Überlastung des Broadcastkanals führen muß. Es läßt sich ausschließen, in dem als zusätzliche Randbedingung für die Optimierung ein minimales Verhältnis 0 < q < 1 von Basisstationen pro MSC-Region definiert wird, die jeder Location Area zugeordnet sein müssen, das heißt

$$\sum_{i=1}^{N} y_{m,i} \geq q \sum_{i=1}^{N} x_{k,i} \quad \forall k \in \{1,...,M\}, \forall m \in M(k), \qquad (19)$$

und diese Randbedingung bei der linearen Optimierung mit berücksichtigt wird.

Eine andere Möglichkeit, das Modell zu verallgemeinern, ist, Kapazitätsbeschränkungen für die BSCs oder die MSCs zu berücksichtigen. Wenn man z. B. annimmt, daß es eine Grenze C für den Gesamtverkehr gibt, der von einer BSC bewältigt werden kann, und $T_i$ der durchschnittliche an der Basisstation i erzeugt Verkehr ist, kann folgende Randbedingung zum Modell hinzugefügt werden

$$\sum_{i=1}^{N} z_{o,i} T_i \leq C \qquad (20)$$

die für jede BSC-Region o gilt. In ähnlicher Weise könnte man eine obere Grenze für die Größe bzw. Teilnehmerzahl der Location Areas einführen, um die Last auf dem Broadcastkanal zu begrenzen. Diverse weitere praktische Anforderungen an einen Netzentwurf können leicht in das Modell integriert werden.

Für große Zahlen von Basisstationen ist es nicht möglich, eine exakte Lösung des Modells zu finden, auch wenn zur Vereinfachung angenommen wird, daß die Funktionen $a_{k,i}(x)$, $A_{k,l,i,j}(x)$, $B_{m,n,i,j}(x)$ und $C_{o,p,i,j}(x)$ lineare Funktionen von x sind.

In der Praxis wird das Modell jedoch häufig nicht in seinem gesamten Umfang und angewendet auf das gesamte Netz benötigt. Deshalb sind diverse Vereinfachungen möglich. Z. B. kann man sich darauf beschränken, von den unterschiedlichen Handover bzw. Location Update-Vorgängen nur diejenigen zu berücksichtigen, die den höchsten Verarbeitungsaufwand verursachen, im allgemeinen diejenigen, die zwischen zwei verschiedenen MSC-Regionen stattfinden. Dies ist gleichbedeutend damit, daß in Formel (1) die Funktionen $B_{m,n,j,j}$, $C_{o,p,j,j} = 0$ gesetzt werden; die Optimierungsaufgabe vereinfacht sich dann auf das Problem, die Variablen $x_{k,i}$ so zu wählen, daß die Formel

$$\sum_{i=1}^{N} a_{k,i}(S(1+g))\, x_{k,i} + \sum_{\substack{l=1 \\ l \neq k}}^{M} \sum_{i=1}^{N} \sum_{j \in N(i)} A_{k,l,i,j}(S(1+g))\, X_{k,l,i,j} \;\leq L_k \quad \forall k \in \{1,...,M\} \tag{21}$$

$$g \geq 0$$

zusammen mit den obigen Formeln (2), (5), (6) erfüllt ist und g maximal wird. Wenn die Funktionen $a_{k,i}(x)$ und $A_{k,l,i,j}(x)$ durch lineare Funktionen in der Form $a_{k,i}(S(1+g)) = (1+g)\, a_{k,i}(S)$ approximiert werden können, kann die Formel 21 auch geschrieben werden als

$$(1+h)\left( \sum_{i=1}^{N} a_i(p)\, x_{k,i} + \sum_{\substack{l=1 \\ l \neq k}}^{M} \sum_{i=1}^{N} \sum_{j \in N(i)} A_{i,j}(p)\, X_{k,l,i,j} \right) \leq hL_k \quad \forall k \in \{1,...,M\} \tag{21'}$$

$$0 < h \leq \infty$$

wobei h=1/g. Die Optimierungsaufgabe ist dann, die $x_{k,i}$ so zu wählen, daß h so klein wie möglich gewählt werden kann.

Im allgemeinen wird ein Netzwerkplaner nicht versuchen, die gesamte Struktur des Netzwerks von Grund auf neu zu entwerfen, sondern er wird lediglich die Bereiche an den Grenzen der MSC-Regionen optimieren. Figur 4 veranschaulicht dies anhand des gleichen Netzausschnitts, der bereits in Figur 1 dargestellt ist. Diejenigen Zellen der MSC-Regionen MSCR1 und MSCR2, die nicht an die jeweils andere Region angrenzen, sind durch Schraffur hervorgehoben. Die Zuordnung dieser Zellen zu ihren MSC-Regionen soll bei der Optimierung nicht in Frage gestellt werden; die Beiträge dieser Zellen zur Verarbeitungslast können deshalb bei der Optimierung zu einem konstanten Term σ zusammengefaßt werden, und die Summation erfolgt nicht über alle Basisstationen i = 1,...,N, sondern nur über diejenigen Basisstationen i, die an der Grenze der MSC-Regionen liegen.

$$(1+h)\left( \sum_{i=1}^{N} a_{k,i}(p)\, x_{k,i} + \sum_{\substack{l=1 \\ l \neq k}}^{M} \sum_{i} \sum_{j \in N(i)} A_{k,l,i,j}(p)\, X_{k,l,i,j} \right) \leq h(L_k - \sigma) \quad \forall k \in \{1,...,M\} \tag{22}$$

$$0 < h < \infty$$

Ein mögliches Ergebnis dieser Optimierung ist in Figur 5 dargestellt: Zwei Basisstationen BTS211, BTS212, die in Figur 4 noch dem BSC21 zugeordnet waren, sind dem BSC11 zugeschlagen worden. Dadurch verschiebt sich die Lage der Grenzlinie L2 zwischen den zwei MSC-Regionen, und die Menge der in einem zweiten Optimierungsschritt zu betrachtenden Basisstationen ist verändert.

Wenn die Optimierung für den neuen Grenzverlauf L2' wiederholt wird, kann auch die Zuordnung von Basisstationen zur MSC-Region MSCR2 in Frage gestellt werden, die im in Figur 4 gezeigten Zustand noch nicht an der Grenze lagen, wie etwa die Basisstationen BTS213, BTS221. Durch mehrfache Wiederholung einer auf den Grenzbereich beschränkten Optimierung können daher auch tiefgreifende Änderungen der Netzstruktur mit geringem Rechenaufwand optimiert werden.

Bei der obigen Beschreibung wurde nur die Optimierung der Zuordnung von Basisstationen bzw. der von ihnen versorgten Zellen zu geographischen Einheiten höherer hierarchischer Stufe des Netzes betrachtet. Es liegt jedoch auf der Hand, daß eine entsprechende Optimierung auch für die Zuordnung von BSC-Region zu Location Areas bzw. MSC-Regionen durchgeführt werden kann, wenn Lastfunktionen wie die Funktionen $a_i$, $A_{i,j}$ etc. für ganze MSC-Regionen anstatt für die Basisstationen formuliert werden und anhand dieser Funktionen eine Formel aufgestellt wird, die die resultierende Last an den MSCs für gegebene Zuordnungen von BSCs zu Location Areas und MSCs zu berechnen gestattet.

**Patentansprüche**

1. Verfahren zum Zuordnen geographischer Einheiten (BTS211, BTS212, ...) einer gegebenen ersten Hierarchiestufe eines Funk-Kommunikationssystems zu geographischen Einheiten (MSCR1, MSCR2) wenigstens einer höheren zweiten Hierarchiestufe, mit den Schritten

   - Aufstellen von Funktionen ($a_i$, $A_{i,j}$, $B_{i,j}$, $C_{i,j}$), die den Umfang einer funk- und/oder vermittlungstechnischen Last, die eine geographische Einheit (BTS211, BTS212, ...) der ersten Hierarchiestufe an einem Knoten (MSC1, MSC2) des Funk-Kommunikaktionssystems hervorruft, als Funktion der Teilnehmerzahl des Funk-Kommunikationssystems angeben,

   - Aufstellen einer Formel, die anhand der genannten Funktionen für eine gegebene Teilnehmerzahl den Umfang der Verarbeitungslast zu berechnen gestattet, die an jedem Knoten (MSC1, MSC2) bei einer gegebenen Zuordnung der Einheiten der ersten Hierarchiestufe zu den Einheiten der zweiten Hierarchiestufe anfällt,

   - anhand der Formel, Auswählen einer Zuordnung, die einen größtmöglichen Zuwachs (g) der Teilnehmerzahl des Funk-Kommunikationssystems erlaubt, ohne daß die Verarbeitungslast an einer geographischen Einheit (MSCR1, MSCR2) der zweiten Hierarchiestufe die Ressourcen dieser Einheit übersteigt.

2. Verfahren nach Anspruch 1, **dadurch gekennzeichnet, daß** zum Auswählen der Zuordnung ein Verfahren der linearen Optimierung eingesetzt wird.

3. Verfahren nach einem der vorher gehenden Ansprüche, **dadurch gekennzeichnet, daß** die Einheiten der ersten Hierarchiestufe Zellen bzw. Basisstationen (BTS211, BTS212, ...) des Funk-Kommunikationssystems sind und die Einheiten der zweiten Hierarchiestufe MSC-Regionen, Location Areas und/oder BSC-Regionen sind.

4. Verfahren nach einem der vorhergehenden Ansprüche, **dadurch gekennzeichnet, daß** die Funktionen ($a_i$, $A_{i,j}$, $B_{i,j}$, $C_{i,j}$) durch lineare Funktionen der Teilnehmerzahl approximiert werden.

5. Verfahren nach einem der vorhergehenden Ansprüche, **dadurch gekennzeichnet, daß** von einer existierenden Zuordnung der Einheiten der ersten Hierarchiestufe des Funk-Kommunikationssystems zu den Einheiten der zweiten Hierarchiestufe ausgegangen wird, und **daß** das Verfahren nur auf solche Einheiten (BTS211, BTS212, ...) der ersten Hierarchiestufe angewendet wird, die an einer Grenze (L2) zweier Einheiten (MSCR1, MSCR2) der zweiten Hierarchiestufe liegen.

6. Verfahren Anspruch 5, **dadurch gekennzeichnet, daß** es iterativ angewendet wird.

BSC22

LA11

BSC13

MSCR2

L1

LA12

MSC2

e

f

a

b

c

d

MSC1

BSC21

BSC12

BTS112

BSC11

BTS111

**Fig. 1**

L2

C

D

A

**Fig. 2**

B

Fig. 5

Fig. 3

Fig. 4